# EUROPÄISCHE PATENTSCHRIFT

(11) **EP 1 189 681 B1**
(45) Veröffentlichungstag und Bekanntmachung des Hinweises auf die Patenterteilung: **19.05.2004**
(21) Anmeldenummer: 00956051.7
(22) Anmeldetag: 28.06.2000
(51) Int. Cl.: B01D 53/86, B01D 53/88

(54) **REINIGUNGSEINRICHTUNG FÜR RAUCHGAS**
DEVICE FOR CLEANING FLUE GAS
DISPOSITIF DE NETTOYAGE DE GAZ DE COMBUSTION

(30) Priorität: 29.06.1999 DE 19929765
(43) Veröffentlichungstag der Anmeldung: 27.03.2002
(73) Patentinhaber: Argillon GmbH, 96257 Redwitz (DE)
(72) Erfinder: SIGLING, Ralf, Alpharetta, GA 30022 (US)
(74) Vertreter: Tergau & Pohl Patentanwälte
(86) Internationale Anmeldenummer: PCT/DE2000/002107
(87) Internationale Veröffentlichungsnummer: WO 2001/000302

(56) Entgegenhaltungen:
- DE-A- 4 309 460
- DE-A- 4 435 103
- DE-C- 19 704 608
- DE-U- 8 619 685
- PATENT ABSTRACTS OF JAPAN vol. 1998, no. 11, 30. September 1998 (1998-09-30) & JP 10 151324 A (BABCOCK HITACHI KK), 9. Juni 1998 (1998-06-09)

## Beschreibung

Die Erfindung bezieht sich auf eine Reinigungseinrichtung für Rauchgas, insbesondere für Rauchgas aus einem mit fossilem Brennstoff befeuerten Dampferzeuger in einem Kraftwerk, mit einer Eindüsvorrichtung für einen ein Reduktionsmittel freisetzenden Zuschlagstoff und mit einem Katalysator zur Reduktion von Stickoxiden.

Bei der Reinigung von Rauchgas, beispielsweise aus einem Dampferzeuger, kommt bei einer katalytischen Stickoxidminderung üblicherweise Ammoniak als Reduktionsmittel oder auch ein Zuschlagstoff, z. B. Harnstoff, zum Einsatz, der ein solches Reduktionsmittel freisetzt. Das vor einem Katalysator in das Rauchgas eingebrachte Ammoniak reagiert zusammen mit Stickoxiden, insbesondere NO und/oder NO₂, an dem in einen Reaktor eingebauten Katalysator zu Stickstoff (N₂) und Wasser (H₂O). Ein geringer Teil des eingedüsten oder eingebrachten Ammoniaks verbleibt häufig als sogenannter Ammoniakschlupf nach dem Katalysator im Rauchgas. Der Ammoniakschlupf ist im Wesentlichen eine Funktion des erforderlichen Stickoxidabscheidegrades, der Aktivität des Katalysators und der Güte der Vermischung des eingedüsten Ammoniaks mit dem Rauchgas. Außerdem spielen die durch eine gleiche Rauchgasgeschwindigkeit an allen Stellen des Reaktorquerschnitts gegebene Gleichmäßigkeit der Durchströmung des Reaktors und eine ungehinderte Erreichbarkeit des gesamten Katalysatormaterials eine entscheidende Rolle.

Diese Voraussetzungen lassen sich im technischen Rahmen und mit vertretbarem Aufwand nur begrenzt realisieren. Infolgedessen kann es zwangsläufig zu einem über den Reaktorquerschnitt ungleichmäßig verteilten Ammoniakschlupf kommen, Im Mittel beträgt dieser mögliche Ammoniakschlupf nur wenige ppm. An einigen Stellen können jedoch Werte auftreten, die ein Vielfaches des Durchschnittswertes betragen.

Im Nachlauf zu dem Katalysator ist häufig ein weiteres Anlagenteil, bei einem Kohlekraftwerk häufig ein Luftvorwärmer (Luvo), angeordnet. In einem solchen Luftvorwärmer erfolgt ein Wärmeaustausch zwischen den noch heißen Rauchgasen und noch kühler Verbrennungsluft. Das Rauchgas kühlt dabei von mehr als 300°C beispielsweise auf ca. 150°C ab. Das Rauchgas enthält möglicherweise Schwefeloxid (SO₃), das aus der Verbrennung des im Brennstoff enthaltenen Schwefels entstanden ist. Dieses Schwefeloxid reagiert mit dem Ammoniak aus dem Ammoniakschlupf in diesem Temperaturbereich gemäß der Beziehung: 2 NH₃ + H₂O + SO₃ ---> (NH₄)2SO₄, also zu Ammoniumsulfat oder gemäß NH₃ + SO₃ + H₂O ---> NH₄HSO₄, also zu Ammoniumhydrogensulfat.

Ammoniumhydrogensulfat ist klebrig und korrosiv wirkend. Aufgrund dieser Eigenschaften bleibt es in dem Katalysator nachgeordneten Anlagenteil bzw. im Luftvorwärmer haften und verursacht dort möglicherweise Verstopfungen und Korrosion. Diesem Effekt begegnet man bisher dadurch, dass der Ammoniakschlupf auf Werte unterhalb von 5 ppm begrenzt wird, in einigen Anlagen sogar auf unter 2 ppm. Dies ist mit entsprechend hohem Aufwand für das erforderliche Katalysatorvolumen verbunden. Dennoch kann nicht ausgeschlossen werden, dass an einigen Stellen des Reaktorquerschnitts ein höherer Ammoniakschlupf als der Durchschnittswert auftritt. Daher kann partiell vor einem bestimmten Bereich des Anlagenteil- oder Luftvorwärmerquerschnitts eine relativ hohe - zu hohe - Ammoniakkonzentration auftreten, so dass das Anlagenteil bzw. der Luftvorwärmer in diesem Bereich durch die obengenannten Vorgänge geschädigt wird.

Insbesondere Anlagen mit Katalysatoren, in denen hohe Stickoxidabscheidegrade - über 85% bis zu 95% und mehr - erreicht werden sollen, stellt sich das Problem der Ungleichverteilung des Ammoniakschlupfes. Der Grund dafür ist, dass es dabei Bereiche im Reaktorquerschnitt geben kann, in welchen zwar noch Ammoniak für die Reaktion zur Verfügung steht, jedoch kein Stickoxid mehr vorhanden ist. In diesen Bereichen wird das dort überschüssige Ammoniak mangels Reaktionspartner nicht mehr abgebaut und verbleibt als örtlich hoher Schlupf in der Anlage. Auch durch ein noch so großes zusätzliches Katalysatorvolumen kann dieser Ammoniakschlupf nicht mehr verringert werden.

Bisher bekannte Maßnahmen zur Lösung des vorgenannten Problems bestehen darin, das eingedüste Ammoniak vor dem Eintritt in den Katalysator gut mit dem Rauchgas zu vermischen und den Katalysator selbst großzügig zu dimensionieren. Beide Maßnahmen verursachen nicht unerhebliche Kosten, führen jedoch nicht im gewünschten Ausmaß zum Erfolg.

JP-A-10151324 und DE-A-4435103 offenbaren bekannte Maßnahme zur Lösung des vorgenannten Problems.

Der Erfindung liegt daher die Aufgabe zugrunde, eine Reinigungseinrichtung für Rauchgas so zu ertüchtigen, dass mindestens vor und in einem dem Katalysator nachgeordneten Anlagenteil, insbesondere vor oder in einem Luftvorwarmer, keine nennenswerten Reaktionen zwischen im Rauchgas noch enthaltenen geringfügigen Resten von Schwefeloxiden und Ammoniak stattfinden.

Diese Aufgabe wird erfindungsgemäß gelöst durch die Merkmale des Anspruchs 1. Dazu ist in Strömungsrichtung hinter dem Katalysator ein erster Mischer zur Vergleichmäßigung der Durchmischung des Rauchgases mit dem Reduktionsmittel vorgesehen. Auch bei einem aus mehreren Katalysatorlagen aufgebauten Katalysator ist zweckmäßigerweise hinter diesem ein solcher (erster) Mischer vorgesehen. Alternativ oder zusätzlich kann zwischen den Katalysatorlagen jeweils ein Mischer vorgesehen sein.

Dieser (erste) Mischer vermischt stromab vom Katalysator im Rauchgasstrom noch vorhandene Strähnen mit überdurchschnittlich hohem Restanteil eines Reduktionsmittels mit dem übrigen Rauchgasstrom. Durch diese Anordnung wird eine derart gleichmäßige Durchmischung des Rauchgases mit einem Rest von Ammoniak erreicht, dass keine Strähnen mit einem Ammoniakgehalt von mehr als 2 ppm mehr vorhanden sind.

Bei einem dem Katalysator nachgeordneten Anlagenteil, z. B. einem Luftvorwärmer, ist der dem Katalysator nachgeordnete (erste) Mischer zweckmäßigerweise näher am Katalysator als am Anlagenteil bzw. Luftvorwärmer vorgesehen.

Nach einer zweckmäßigen Weiterbildung sind zwischen der Eindüsvorrichtung der Reinigungseinrichtung und dem Katalysator in Strömungsrichtung des Rauchgases hintereinander ein weiterer (zweiter) Mischer, eine Umlenkeinrichtung für das Rauchgas und/oder ein Gleichrichter für den Rauchgasstrom vorgesehen. Außerdem ist bei einem modular und lagenweise aufgebauten Katalysator zweckmäßigerweise unmittelbar stromab von mindestens einer Katalysatorlage ein Mischer und stromauf von mindestens einer Katalysatorlage ein Gleichrichter für den Rauchgasstrom vorgesehen.

Gemäß einer vorteilhaften Ausgestaltung bestehen die vorzugsweise statischen Mischer aus in einem Rauchgaskanal unbeweglich eingebauten Lamellen, die vom Rauchgas schräg angeströmt sind. Dabei sind die Lamellen vorzugsweise von einem den Katalysatorlagen zugeordneten Mischer 50 mm bis 200 mm breit. Die Lamellen des der Eindüseinrichtung folgenden und des letzten vor dem Luftvorwärmer oder Anlagenteil liegenden Mischers sind dann zweckmäßigerweise breiter als, vorzugsweise doppelt so breit wie, die Lamellen in den den einzelnen Lagen des Katalysators zugeordneten Mischern. Auch kann mindestens einer der Mischer als Ventilator und somit als aktiver Mischer ausgebildet sein.

Nach anderen vorteilhaften Ausgestaltungen ist mindestens ein Gleichrichter in Strömungsrichtung des Rauchgases 50 mm bis 200 mm hoch und/oder aus strömungsparallel angeordneten Lamellen, vorzugsweise aus 1 mm bis 4 mm starken Blechstreifen, zusammengesetzt. Auch können die Lamellen mindestens eines der Gleichrichter ein Gitter, vorzugsweise mit einer Maschenweite von 20 mm bis 50 mm, oder einen Rost aus, vorzugsweise im Abstand von 20 mm bis 50 mm parallel zueinander liegenden, Blechstreifen bilden. Dabei sind dann die Lamellen von zwei aufeinanderfolgenden Rosten, vorzugsweise um 90°, gegeneinander verschwenkt.

Die mit der Erfindung erzielten Vorteile bestehen insbesondere darin, dass durch Einsatz mindestens eines Mischers hinter einem auch lagenweise aufgebauten Katalysator einer eine Eindüsvorrichtung für ein Reduktionsmittel aufweisenden Reinigungseinrichtung eine derartige Gleichmäßigkeit der Durchmischung erzielt wird, dass praktisch eine Homogenität des Gasgemischs aus Rauchgas, einem Rest von überschüssigem Ammoniak und noch vorhandenen Resten anderer Gase erreicht ist. In diesem praktisch homogenen Gemisch finden die eingangs genannten unerwünschten Reaktionen nicht mehr statt.

Nachfolgend werden Ausführungsbeispiele der Erfindung anhand einer Zeichnung näher erläutert. Darin zeigen:

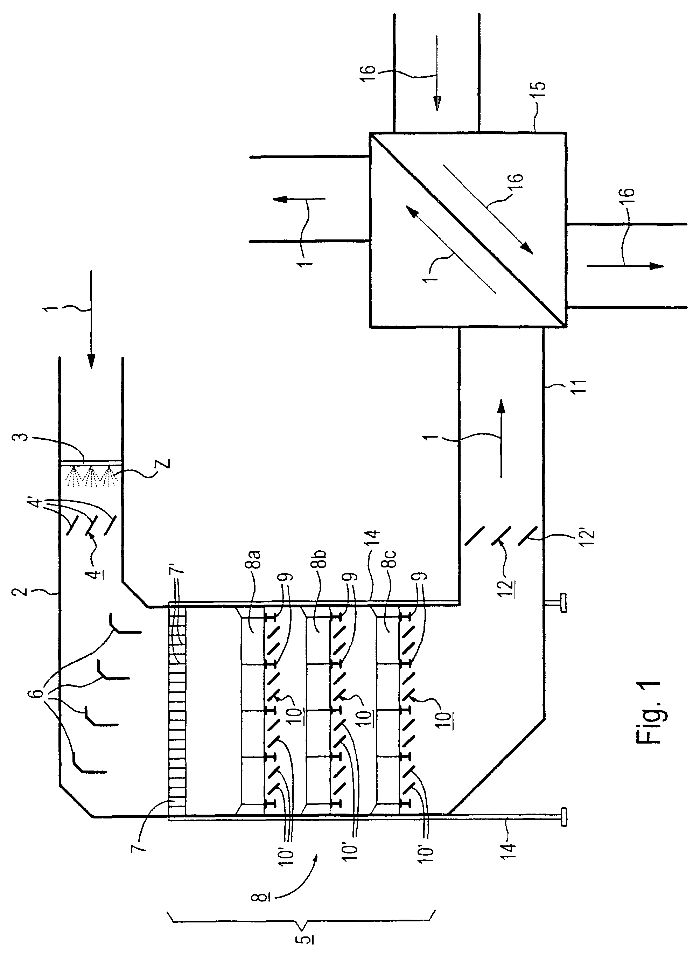

- FIG 1: einen prinzipiellen Aufbau einer Reinigungseinrichtung mit zusätzlichen Mischern hinter einem lagenweise aufgebauten Katalysator, und
- FIG 2: einen prinzipiellen Aufbau einer Reinigungseinrichtung mit zusätzlichen Mischern und Gleichrichtern im lagenweise aufgebauten Katalysator.

Einander entsprechende Teile sind in beiden Figuren mit den gleichen Bezugszeichen versehen.

Rauchgas 1 aus einem nicht dargestellten Dampferzeuger eines Kraftwerks mit einer thermischen Leistung von z. B. einigen MW bis zu mehr als 1000 MW strömt durch einen Rauchgaskanal 2 zu einer Eindüsvorrichtung 3. Der Dampferzeuger kann mit Kohle, mit Abfall und/oder Öl befeuert sein, so dass bei den heute üblichen hohen Verbrennungstemperaturen in jedem Fall Stickoxide gebildet werden, die mit dem Rauchgas 1 zusammen abfließen. Die Eindüsvorrichtung 3 ist in einem horizontalen Abschnitt des Rauchgaskanals 2 vor einem (zweiten) Mischer 4 mit schräg zum strömenden Rauchgas 1 und unbeweglich stehenden Lamellen 4' angeordnet. Der Mischer 4 vermischt ein Reduktionsmittel, beispielsweise Ammoniak, mit dem Rauchgas 1. Dazu wird beispielsweise ein das Reduktionsmittel freisetzender Zuschlagstoff Z, z. B. Harnstoff, in den Rauchgaskanal 2 eingedüst.

Der Rauchgaskanal 2 mündet in das obere Ende eines Katalysatorturms 5 mit einem gegenüber dem Rauchgaskanal 2 erheblich erweiterten Querschnitt. Der Katalysatorturm 5 ist bis zu 30 m oder mehr hoch und wird von senkrechten Beinen 14 getragen. Im Übergangsbereich vom Rauchgaskanal 2 zum Katalysatorturm 5 sind Umlenkwände 6 angeordnet, die einerseits eine verlustarme Umlenkung des strömenden Rauchgases oder Rauchgasstroms 1 gewährleisten und andererseits eine Entmischung des Gasgemisches aus Rauchgas 1 und dem Reduktionsmittel verhindern.

An der Einmündung des Rauchgaskanals 2 in den Katalysatorturm 5 ist quer zum strömenden Rauchgas 1 ein Gleichrichter 7 vorgesehen, der Turbulenzen im strömenden Rauchgas 1 oder Rauchgasstrom weitgehend unterdrückt. Dadurch sind Erosionsvorgänge am Eintritt des Rauchgases 1 in eine oberste Katalysatorlage 8a eines modular aufgebauten Katalysators 8 auf ein erträgliches Maß reduziert. Jede Katalysatorlage 8a bis 8c liegt auf quer im Katalysatorturm 5 gehaltenen Trägern 9 und erstreckt sich über den gesamten Querschnitt des Katalysatorturms 5. Bei beiden Ausführungsbeispielen besteht der Katalysator 8 in nicht näher dargestellter Art und Weise aus jeweils drei Lagen 8a bis 8c mit je vier mal vier Katalysatormodulen.

Unterhalb jeder Katalysatorlage 8a bis 8c ist ein zweckmäßigerweise ebenfalls lamellenartiger und somit statischer Mischer 10 aus z. B. parallel zueinander angeordneten, vorzugsweise 50 mm bis 200 mm breiten, Lamellen 10' aus 1 mm bis 4 mm dicken Blechstreifen vorgesehen. Die Lamellen 10' sind - ebenso wie die Lamellen 4' des Mischers 4 - um ihre Längsachse geschwenkt und stehen schräg zum strömenden Rauchgas 1. Dadurch ist gewährleistet, dass das Rauchgas 1 nach dem Passieren jeder Katalysatorlage 8a bis 8c aufs neue durchmischt wird. Insbesondere wird so die Bildung von Rauchgassträhnen mit überdurchschnittlich hohem Anteil an Reduktionsmittel verhindert.

Nach dem Austritt des Rauchgases 1 aus der untersten Lage 8c des Katalysators 8 wird das strömende Rauchgas 1 in einen wiederum waagerechten Rauchgaskanal 11 umgelenkt. Dabei erzeugte Turbulenzen werden in einem in Strömungsrichtung hinter dem Katalysator 8 angeordneten (ersten) Mischer 12 mit vorzugsweise ebenfalls schräg zum strömenden Rauchgas 1 stehenden Lamellen 12' verstärkt, so dass das an Stickoxid arme Rauchgas 1 als praktisch homogene Mischung durch den Rauchgaskanal 11 zu einem Luftvorwärmer 15 strömt. In dem Luftvorwärmer 15 heizt das hier immer noch mit einer Temperatur von mehr als 300°C ankommende Rauchgas Verbrennungsluft 16 auf, die in nicht näher dargestellter Art und Weise einem Brennraum in einem Dampferzeuger zugeführt wird. Auch kann anstelle des Luftvorwärmers 15 hinter dem Katalysator 8 ein anderes vom Rauchgas 1 angeströmtes Anlagenteil angeordnet sein.

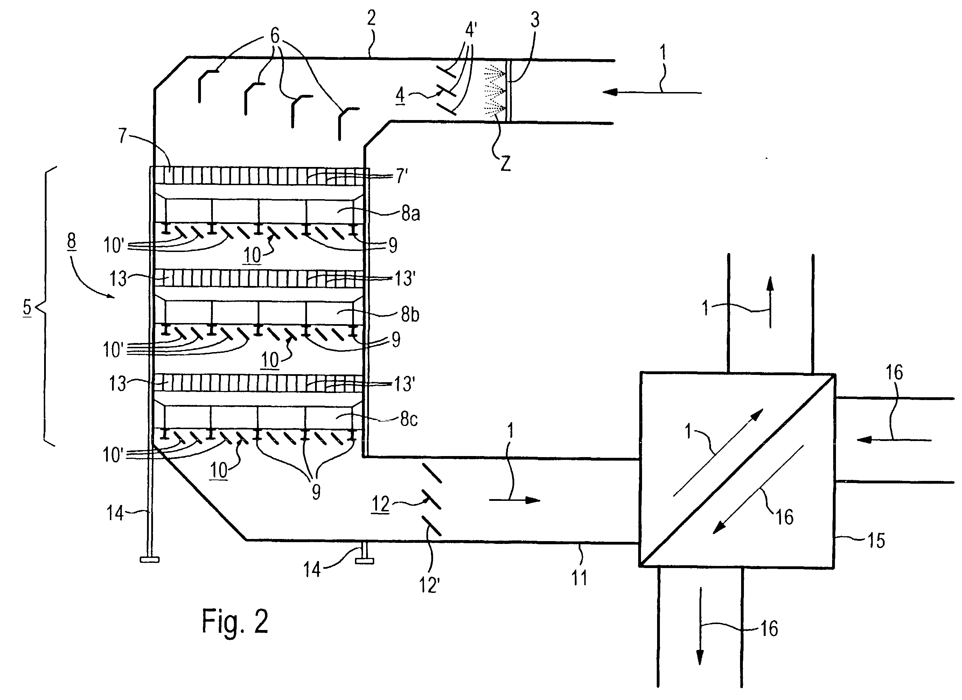

Obwohl der reale Abstand zwischen aufeinanderfolgenden Lagen 8a bis 8c des Katalysators 8 in der Größenordnung von 1 m bis 2 m liegt, ist es möglich, dass das strömende Rauchgas 1 an einigen Stellen schräg auf die folgende Katalysatorlage 8b oder 8c auftrifft. Dabei können unerwünscht hohe Erosionen, insbesondere in einer katalytisch aktiven Oberflächenschicht, auftreten. Um dies sicher zu vermeiden, ist in dem Ausführungsbeispiel gemäß Fig. 2 vor jeder Lage 8b und 8c des Katalysators 8 ein Gleichrichter 13 angeordnet, der jeweils alle Rauchgassträhnen in eine achsparallele Richtung zwingt.

Diese Gleichrichter 13 sind - wie auch die Mischer 4,10,12 und der Gleichrichter 7 - ebenfalls lamellenartig ausgebildet und beispielsweise aus 50 mm bis 200 mm breiten Lamellen 13' aus 1 mm bis 4 mm dicken Blechstreifen aufgebaut. Die Lamellen 13' der Gleichrichter 13 sowie die Lamellen 7' des Gleichrichters 7 liegen jedoch ausnahmslos alle parallel zum strömenden Rauchgas 1 und bilden entweder einen Rost aus parallelen oder ein Gitter aus sich kreuzenden Lamellen 7' bzw. 13'. Sind die Gleichrichter 13 als Rost ausgeführt, so sind aufeinanderfolgende Roste um eine zum Rauchgasstrom parallele Achse beispielsweise um 90° gegeneinander verschwenkt.

Durch den Einsatz der Mischer 10 und/oder ganz besonders auch durch den Einsatz des Mischers 12 ist die Betriebssicherheit der Entstickungsanlage (Katalysator) und vor allem auch die Betriebssicherheit des im strömenden Rauchgas 1 weiter stromab liegenden Luftvorwärmers 15 deutlich erhöht. Dies ist wichtig vor allem für Entstickungsanlagen mit hohen Stickoxidabscheideraten.

Die Reinigungseinrichtung bleibt auch wirtschaftlich, weil die zusätzlich eingesetzten Mischer 10 und 12 ebenso wie die von Fall zu Fall erforderlichen Gleichrichter 13 kostengünstige, einfach zu installierende und zuverlässige Bauteile darstellen. Außerdem ist der durch diese Bauteile verursachte Druckabfall deutlich geringer als der Druckabfall in den einzelnen Lagen 8a bis 8c des Katalysators 8. Durch die gute Durchmischung der Gase ist es in einigen Fällen - durch entsprechende Optimierung der Anlage - sogar möglich, im Vergleich zu einer Reinigungseinrichtung ohne die Mischer 12 und/oder 10 eine Verringerung der Katalysatormasse zu erreichen.

## Patentansprüche

1. Reinigungseinrichtung für Rauchgas (1), insbesondere für Rauchgas (1) aus einem mit fossilem Brennstoff befeuerten Dampferzeuger in einem Kraftwerk, mit einer Eindüsvorrichtung (3) für einen ein Reduktionsmittel freisetzenden Zuschlagstoff (Z) und mit einem Katalysator (8) zur Reduktion von Stickoxiden, **dadurch gekennzeichnet, dass** in Strömungsrichtung hinter dem Katalysator (8) ein erster Mischer (10,12) zur Vergleichmäßigung der Durchmischung des Rauchgases (1) mit dem Reduktionsmittel vorgesehen ist.

2. Reinigungseinrichtung nach Anspruch 1, **dadurch gekennzeichnet, dass** zwischen der Eindüsvorrichtung (3) und dem Katalysator (8) in Strömungsrichtung des Rauchgases (1) hintereinander zusätzlich ein zweiter Mischer (4) und/oder ein erster Gleichrichter (7) für das strömende Rauchgas (1) vorgesehen sind.

3. Reinigungseinrichtung nach Anspruch 2, **dadurch gekennzeichnet, dass** zwischen dem zweiten Mischer (4) und dem ersten Gleichrichter (7) eine Umlenkvorrichtung (6) für das strömende Rauchgas (1) vorgesehen ist.

4. Reinigungseinrichtung nach einem der Ansprüche 1 bis 3, **dadurch gekennzeichnet, dass** bei einem lagenweise aufgebauten Katalysator (8) stromab von der oder jeder Katalysatorlage (8a bis 8c) ein (erster) Mischer (10) vorgesehen ist.

5. Reinigungseinrichtung nach Anspruch 4, **dadurch gekennzeichnet, dass** im Katalysator (8) stromauf von mindestens einer Katalysatorlage (8a,8b,8c) ein zweiter Gleichrichter (13) für das strömende Rauchgas (1) vorgesehen ist.

6. Reinigungseinrichtung nach einem der Ansprüche 1 bis 5, **dadurch gekennzeichnet, dass** der oder jeder Mischer (4,10,12) ein statischer Mischer ist.

7. Reinigungseinrichtung nach einem der Ansprüche 1 bis 6, **dadurch gekennzeichnet, dass** der oder jeder Mischer (4,10,12) aus unbeweglichen Lamellen (4',10',12') besteht, die schräg zum strömenden Rauchgas (1) stehen.

8. Reinigungseinrichtung nach einem der Ansprüche 3 bis 7, **gekennzeichnet durch** einen lammellen- oder gitterartig ausgebildeten Gleichrichter (7,13).

9. Reinigungseinrichtung nach einem der Ansprüche 1 bis 6, **dadurch gekennzeichnet, dass** bei einem dem Katalysator (8) nachgeschalteten und vom Rauchgas (1) beheizten Luftvorwärmer (15) diesem der (erste) Mischer (12) vorgeordnet ist.

10. Reinigungseinrichtung nach einem oder mehreren der vorherigen Ansprüche, **dadurch gekennzeichnet, dass** der dem Katalysator (8) nachgeordnete (erste) Mischer (12) und/oder der der Eindüsvorrichtung (3) nachgeordnete (zweite) Mischer (4) breitere Lammelen (12',4') aufweist als der einer einzelnen Katalysatorlage (8a bis 8c) zugeordnete Mischer (10).

## Claims

1. Device for cleaning flue gas (1), in particular flue gas (1) from a fossil-fired steam generator in a power plant, having an apparatus (3) for injecting an additive (Z) which releases a reducing agent, and having a catalytic converter (8) for the reduction of nitrogen oxides, **characterized in that** a first mixer (10, 12) for making the mixing of the flue gas (1) with the reducing agent more uniform, is provided downstream of the catalytic converter (8), as seen in the direction of flow.

2. Cleaning device according to Claim 1, **characterized in that** a second mixer (4) and/or a first rectifier (7) for the flowing flue gas (1) are provided in series, as seen in the direction of flow of the flue gases (1) between the injection apparatus (3) and the catalytic converter (8).

3. Cleaning device according to Claim 2,
**characterized in that** a diverter apparatus (6) for the flowing flue gas (1) is provided between the second mixer (4) and the first rectifier (7).

4. Cleaning device according to one of Claims 1 to 3, **characterized in that**, if the catalytic converter (8) is composed of layers, a (first) mixer (10) is provided downstream of the or each catalytic-converter layer (8a to 8c).

5. Cleaning device according to Claim 4, **characterized in that** a second rectifier (13) for the flowing flue gas (1) is provided in the catalytic converter (8) upstream of at least one catalytic converter layer (8a, 8b, 8c).

6. Cleaning device according to one of Claims 1 to 5, **characterized in that** the or each mixer (4, 10, 12) is a static mixer.

7. Cleaning device according to one of Claims 1 to 6, **characterized in that** the or each mixer (4, 10, 12) comprises unmovable lamellae (4', 10', 12'), which are inclined with respect to the flowing flue gas.

8. Cleaning device according to one of Claims 3 to 7, **characterized by** a rectifier (7, 13) which is in lamella or grid form.

9. Cleaning device according to one of Claims 1 to 6, **characterized in that**, if there is an air preheater (15) connected downstream of the catalytic converter (8) and heated by the flue gas (1), the (first) mixer (12) is arranged upstream of this preheater.

10. Cleaning device according to one or more of the preceding claims, **characterized in that** the (first) mixer (12), which is arranged downstream of the catalytic converter (8), and/or the (second) mixer (4), which is arranged downstream of the injection apparatus (3), has wider lamellae (12', 4') than the mixer (10) assigned to an individual catalytic-converter layer (8a to 8c).

## Revendications

1. Dispositif d'épuration de gaz (1 ) brûlés, notamment de gaz (1 ) brûlés, d'un générateur de vapeur alimenté en combustible fossile d'une centrale électrique, comprenant un dispositif (3) d'injection d'un additif (Z) dégageant un agent réducteur et un catalyseur (8) de réduction des oxydes d'azote, **caractérisé en ce qu'**il est prévu, dans le sens du courant, en aval du catalyseur (8), un premier mélangeur (10, 12) d'homogénéisation du mélange du gaz (1) brûlé avec l'agent réducteur.

2. Dispositif d'épuration, suivant la revendication 1, **caractérisé en ce qu'**il est prévu entre le dispositif (3) d'injection et le catalyseur (8), dans le sens du courant de gaz (1) brûlés, successivement en plus un deuxième mélangeur et/ou un premier suppresseur (7) de turbulence pour les gaz (1) brûlés qui s'écoulent.

3. Dispositif d'épuration suivant la revendication 2, **caractérisé en ce qu'**il est prévu entre le deuxième mélangeur et le premier suppresseur (7) de turbulence un dispositif (6) de déviation des gaz (1) brûlés qui s'écoulent.

4. Dispositif d'épuration suivant l'une des revendications 1 à 3, **caractérisé en ce que**, pour un catalyseur (8) constitué couche par couche, il est prévu en aval de la couche ou de chaque couche (8a à 8c) de catalyseur un (premier) mélangeur.

5. Dispositif d'épuration suivant la revendication 4, **caractérisé en ce qu'**il et prévu dans le catalyseur (8) en amont d'au moins une couche (8a, 8b, 8c) de catalyseur un deuxième suppresseur (13) de turbulence pour les gaz (1) brûlés qui s'écoulent.

6. Dispositif d'épuration suivant l'une des revendications 1 à 5, **caractérisé en ce que** le mélangeur ou chaque mélangeur (4, 10, 12) est un mélangeur statique.

7. Dispositif d'épuration suivant l'une des revendications 1 à 6, **caractérisé en ce que** le mélangeur ou chaque mélangeur (4, 10, 12) est constitué de lamelles (4', 10', 12') immobiles qui sont inclinées par rapport aux gaz (1) brûlés qui s'écoulent.

8. Dispositif d'épuration suivant l'une des revendications 3 à 7, **caractérisé par** un suppresseur (7, 13) de turbulence de type à lamelles ou à réseau.

9. Dispositif d'épuration suivant l'une de revendications 1 à 6, **caractérisé en ce que** dans le cas d'un préchauffeur (15) d'air monté en aval du catalyseur (8) et chauffé par les gaz (1) brûlés, le (premier) mélangeur (12) est monté en amont du préchauffeur.

10. Dispositif d'épuration suivant l'une ou plusieurs des revendications précédentes, **caractérisé en ce que** le (premier) mélangeur (12) monté en aval du catalyseur (8) et/ou le (deuxième) mélangeur (4) monté en aval du dispositif (3) d'injection a des lamelles (12', 4') plus larges que celles du mélangeur (10) associé à une couche (8a à 8c) de catalyseur.
